# EUROPEAN PATENT APPLICATION

(11) **EP 2 787 452 A1**
(43) Date of publication of application: **08.10.2014**
(21) Application number: 12854104.2
(22) Date of filing: 06.11.2012
(51) Int. Cl.: G06F 17/30

(54) **INFORMATION SEARCHING METHOD AND SYSTEM**

(30) Priority: 28.11.2011 CN 201110383938
(71) Applicant: Tencent Technology Shenzhen Company Limited, Shenzhen, Guangdong 518044 (CN)
(72) Inventor: SUN, Liang, Shenzhen Guangdong 518044 (CN); DENG, Huifang, Shenzhen Guangdong 518044 (CN)
(74) Representative: Chiva, Andrew Peter
(86) International application number: PCT/CN2012/084113
(87) International publication number: WO 2013/078935

(57) **Abstract**

Examples of the present disclosure may provide an information searching method and system. A searching request comprising searching key information may be received. General data comprising the searching key information may be obtained from a general data resource database. Associated data associated with the searching key information may be obtained from an associated data resource database. The general data and the associated data may be integrated into integrated data and the integrated data may be displayed on a webpage. With the technical scheme of the present disclosure, the associated data may be obtained in the process of information searching and more object information may be obtained.

## Description

This application claims the benefit of priority from Chinese Patent Application, No. 201110383938.2, entitled "Information searching method and system" and filed on November 28, 2011, the entire content of which is hereby incorporated by reference.

### FIELD OF THE INVENTION

The present disclosure relates to information processing technologies, and more particularly, to an information searching method and system.

### BACKGROUND

At present, when information searching is performed, a user may search for information, such as News and entertainment using a terminal device, such as a mobile phone via a Wireless Application Protocol (WAP) or a client terminal device mode. A searching engine foreground may receive a searching request from the user. The searching request may include searching key information. The searching engine foreground may obtain data including the searching key information from a data resource database and display the data.

The searching engine foreground may display searched content in a searching result rich display mode. That is, the displayed searching result may consist of a title, an abstract, an original link, webpage time and a website snapshot, etc. More information may be displayed in the searching result according to different webpage types with the searching result rich display mode. It may be assumed that the searching key information may be "a homepage of Sina", the link of the homepage of Sina, i.e. www.sina.com.cn, may be displayed except for the title and abstract of the homepage of Sina. Furthermore, links of major parts in the homepage of Sina, such as links of "News", "blog" and "stock", etc. may be displayed. A webpage may be accessed via clicking a corresponding displayed webpage link.

When the information searching is performed with the conventional method, data including the searching key information may be obtained. However, data associated with the searching key information may not be obtained and a query operation may not be performed with corresponding object information. As for a current mobile searching engine, a manufacturer of the mobile searching engine may mainly provide information query services to users. The main process of an information query service may be searching for web and WAP information and perform index ranking on the web and WAP information for the convenience of searching of the user. With the information query service, searching requirements of the user may not be well satisfied and partial of the requirements may be neglected. Therefore, the result rich display of the mobile searching of the information query services need to be enhanced. For instance, if a user searches for a name of a restaurant, different results may provide information, such as a related addresses, News and stock (if the searching result has been listed). However, other information that the user may wish to consult, such as, what time there may be empty locations and whether to accept reservation, may not be provided. Furthermore, contact information with which the user may perform object query in time may not be provided in the searching result.

### SUMMARY

An example of the present disclosure may provide an information searching method, which may obtain associated data in a process of information searching and obtain more object information.

Another example of the present disclosure may provide an information searching system, which may obtain associated data in a process of information searching and obtain more object information.

An information searching method may include:
receiving a searching request including searching key information;
obtaining general data including the searching key information from a general data resource database;
obtaining associated data associated with the searching key information from an associated data resource database; and
integrating the general data and the associated data into integrated data.

An information searching system may include a searching engine foreground and a data searching background.

The searching engine foreground is to receive a searching request including searching key information, send the searching request to the data searching background, receive integrated data from the data searching background and display the integrated data on a webpage; and
the data searching background is to obtain general data including the searching key information from a general data resource database, obtain associated data associated with the searching key information from an associated data resource database, integrate the general data and associated data into the integrated data and send the integrated data to the searching engine foreground.

Another information searching method may include:
receiving a searching request including searching key information;
obtaining general data including the searching key information from a general data resource database;
obtaining associated data associated with the searching key information from an associated data resource database;
integrating the general data and the associated data into integrated data; and
sending the integrated data to a searching engine foreground for displaying.

A data searching background may be to receive a searching request including searching key information from a searching engine foreground, obtain general data including the searching key information from a general data resource database, obtain associated data associated with the searching key information from an associated data resource database, integrate the general data and the associated data into integrated data and send the integrated data to the searching engine foreground for displaying.

In can be seen from the above technical scheme that in an example of the present disclosure, after the searching request including the searching key information is received, not only the general data including the searching key information may be obtained, but also the associated data associated with the searching key information may be obtained. The general data and the associated data may be integrated into the integrated data and the integrated data may be displayed on the webpage. Therefore, when the information searching is performed with the technical scheme of the present disclosure, not only the general data may be provided to the user, but also the associated data may be provided to the user. Therefore, the user may obtain more and more detailed object information. It may be more convenient for the user to query the object.

### BRIEF DESCRIPTION OF THE DRAWINGS

Figure 1 is a schematic diagram illustrating structure of an information searching system in accordance with an example of the present disclosure;
Figure 2 is a flow chart illustrating an information searching method in accordance with a first example of the present disclosure; and
Figure 3 is a flow chart illustrating another information searching method in accordance with a second example of the present disclosure.

### DETAILED DESCRIPTION

In order to make objectives, technical solutions and advantages of the present invention more apparent, the present invention will be described in detail hereinafter with reference to accompanying drawings.

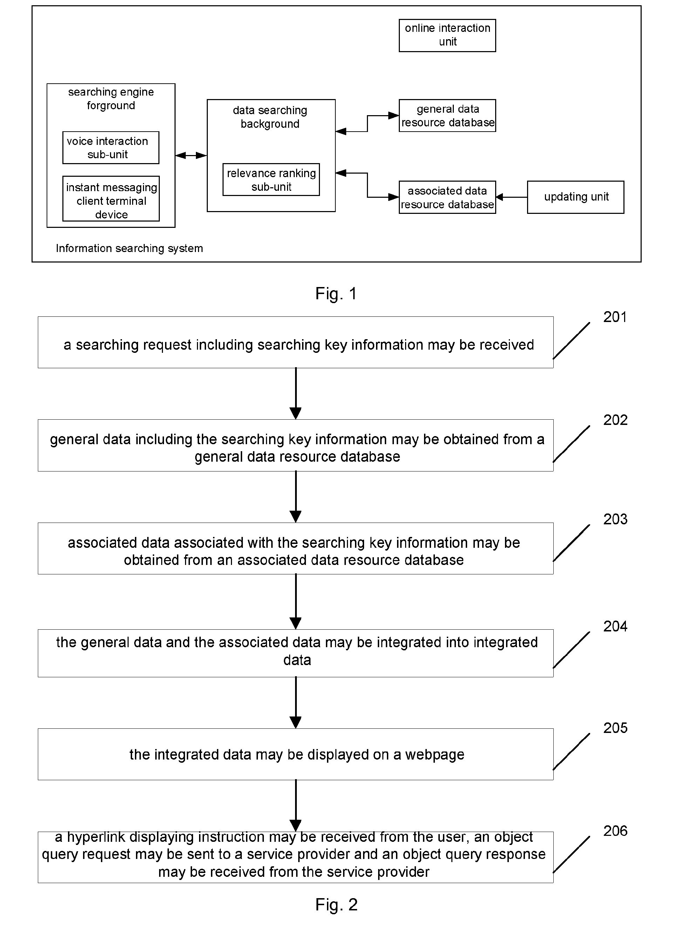

According to an example of the present disclosure, when information searching is performed, not only general data may be obtained, but also associated data may be obtained. The general data may refer to data including searching key information. The associated data may refer to data associated with the searching key information. Furthermore, according to an example of the present disclosure, an object corresponding to the associated data may be queried. Referring to figure 1, figure 1 is a schematic diagram illustrating structure of an information searching system in accordance with an example of the present disclosure. The system may include: a searching engine foreground and a data searching background.

The searching engine foreground may be to receive a searching request carrying searching key information and send the searching request to the data searching background.

The data searching background may be to obtain general data including the searching key information from a general data resource database and obtain associated data associated with the searching key information from an associated data resource database, integrate the general data and the associated data into integrated data and send the integrated data to the searching engine foreground.

The searching engine foreground may be further to display the integrated data from the data searching background on a webpage.

The searching engine foreground may be further to display the associated data as a hyperlink in the integrated data on the webpage, receive a hyperlink displaying instruction from a user, receive an object query request from the user, send the object query request to a service provider and receive an object query response from the service provider.

The searching engine foreground may display the integrated data in a searching result rich display mode. The displayed searching result may include a title, an abstract, an original link, webpage time and a website snapshot, etc. Furthermore, the associated data may be displayed as the hyperlink on the webpage. For instance, if received searching key information may be "MuWu barbecue", the associated data may include a telephone number. The associated data may be a chat tool, such as qq, msn and micro-blog, etc. When a searching result is displayed, not only a title, an abstract and a webpage link of the MuWu barbecue may be displayed, but also the telephone number may be displayed as a hyperlink. That is, a telephone icon and telephone number may be displayed as the hyperlink. Then, the user may send a hyperlink displaying instruction for displaying the telephone icon as the hyperlink to the searching engine foreground. That is, when the user clicks the telephone icon, a connection with the service provide may be established. The MuWu barbecue may be queried after dialing the telephone number online. After the telephone number is dialed, the searching engine foreground may send an object query request about service details put forwarded by the user to the service provider, such as the service provider of the MuWu barbecue and receive an object query response from the service provider. Then, the searching engine foreground may feed the object query response to the user via voices or a dialog box, etc.

Optionally, the searching engine foreground may further receive a negotiation request from the user after receiving the object query response and negotiate a reservation object and reservation number with the service provider.

Similarly, description may be given hereinafter taking the "MuWu barbecue" for example. After the user clicks the telephone icon on the webpage and query against the MuWu barbecue is performed, reservation information may be negotiated online. According to this example, the reservation object may be reserving a dinner of a day and the reservation number may include number of dinners and meal price.

The system may further include an online interaction unit, to receive content of the reservation object and reservation number from the user.

Similarly, the description may be given hereinafter taking the foregoing "MuWu barbecue" for example. The user may click the telephone icon on the webpage. After the MuWu barbecue is queried and the reservation is made, the user may perform online payment using the online interaction unit and send the negotiated meal price to a designated account.

The data searching background may include a relevance ranking sub-unit, to perform relevance calculation on obtained associated data, rank the associated data in an order of decreasing relevance, select set number of associated data with the highest relevance, integrate the general data and associated data and send integrated data to the searching engine foreground.

The system may further include an updating unit, to receive an associated data update request, update the associated data stored in the associated data resource database. The update request may include update content.

The searching engine foreground may further include a voice interaction sub-unit, to send an object query request to the service provider in a voice mode and receive the object query response from the service provider in the voice mode.

The searching engine foreground may further include an instant messaging client terminal device, to send the object query request to the service provider in an instant messaging mode and receive the object query response from the service provider in the instant messaging mode. The instant messaging client terminal device may be a QQ client terminal device.

The object query request and object query response may be implemented in many ways. The object query request and object query response may be implemented in the voice mode and instant messaging mode, a short messaging mode and micro-blog mode, etc.

Referring to figure 2, figure 2 is a flow chart illustrating an information searching method in accordance with a first example of the present disclosure. The method may include following blocks.

In block 201, a searching request including searching key information may be received.

In block 202, general data including the searching key information may be obtained from a general data resource database.

The general data may be obtained according to a conventional method.

In block 203, associated data associated with the searching key information may be obtained from an associated data resource database.

The associated data resource database may store the associated data associated with the searching key information.

In block 204, the general data and the associated data may be integrated into integrated data.

Relevance calculation may be performed on the obtained associated data before integration may be performed. The associated data may be ranked in an order of decreasing relevance and set number of associated data with the highest relevance may be selected. The general data and the selected associated data may be integrated into the integrated data.

In block 205, the integrated data may be displayed on a webpage.

The associated data in the integrated data may be displayed as a hyperlink on the webpage.

In block 206, a hyperlink displaying instruction may be received from the user, an object query request may be sent to a service provider and an object query response may be received from the service provider.

After the block 206, the method may further include: receiving a negotiation request from the user, negotiating a reservation object and reservation number with the service provider and receiving content about the reservation object and reservation number from the user.

The method may further include: receiving an associated data update request including update content and updating the associated data stored in the associated data resource database.

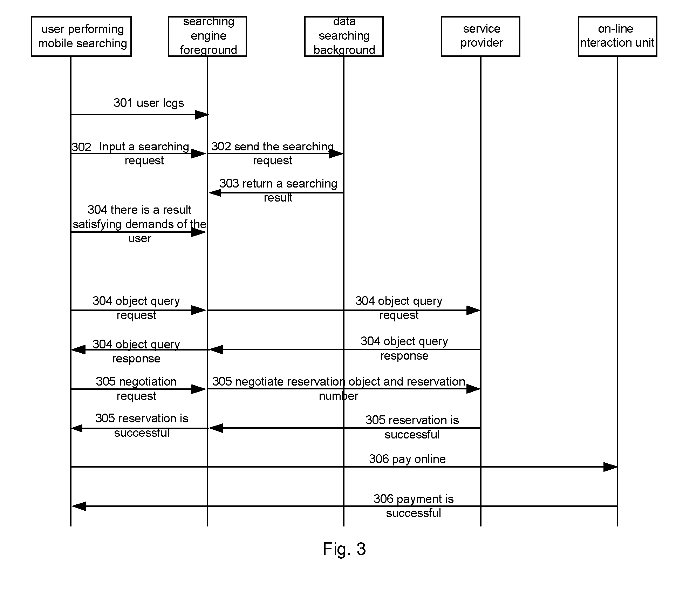

Referring to figure 3, figure 3 is a flow chart illustrating an information searching method in accordance with a second example of the present disclosure. This example may be described hereinafter accompanying with the structure of the system shown in figure 1. The method may include following blocks.

In block 301, a user performing mobile searching may log on a mobile searching engine foreground.

In block 302, the searching engine foreground may receive a searching request input by the user and send the searching request to a data searching background. The searching request may include searching key information.

In block 303, the data searching background may obtain general data including the searching key information from a general data resource database, obtain associated data associated with the searching key information from an associated data resource database, integrate the general data and the associated data and send integrated data to the searching engine foreground. The searching engine foreground may display the integrated data and display the associated data as a hyperlink on a webpage.

In block 304, if the user performing the mobile searching finds results satisfying his/her demands from the displayed associated data, the user may send a hyperlink displaying instruction to the searching engine foreground and send an object query request to the searching engine foreground. The searching engine foreground may send the object query request to a service provider, receive an object query response from the service provider and feed the object query response back to the user.

In block 305, the searching engine foreground may receive a negotiation request from the user and negotiate a reservation object and reservation number with the service provider. If the negotiation is successful, the service provider may send a reservation success message to the searching engine foreground. The searching engine foreground may send the reservation success message to the user performing the mobile searching.

In block 306, the user performing the mobile searching may perform online payment using an online interaction unit and send the negotiated price to a designated account. The online interaction unit may inform the user performing the mobile searching that the payment is successful.

According to an example of the present disclosure, the information searching system may display the integrated data in in a searching result rich display mode. Therefore, the user performing the mobile searching may obtain the associated data from the searching result with the convenience of the mobile device. While the information searching system may obtain the general data, the information searching system may further cooperate with a high-quality third-party data provider, obtain third-party data from the third-party data provider and integrate the third-party data and the general data. The third-party data may be the associated data. When the user performing the mobile searching performs the mobile searching, the information searching system may integrate resources with high relevance and display the integrated resources to the user performing the mobile searching in the searching result rich display mode. The user performing the mobile searching may query services via a telephone, short message and a micro-blog, etc., and reserve a service according to actual situations. After the user determines to buy the service, the user may perform online payment according to actual situations. For instance, after the user performing the mobile searching searches out a hotel, the user may directly dial contact information of the hotel in the searching result, reserve the hotel and pay for it.

According to an example of the present disclosure, the searching engine foreground may implement following functions.

The searching engine foreground may receive a query string from the user, process the query string and send the processed query string to a data searching integration and ranking module. The query string may be the searching request.

The searching engine foreground may receive a searching and ranking result from the data searching background.

The searching engine foreground may add a hyperlink to high-quality data, such as a telephone number of a commercial tenant and display the hyperlink. The user performing the mobile searching may directly dial the telephone number by clicking the hyperlink or send a short message to the telephone number. The commercial tenant may further provide network contact information such as the micro-blog, so that the user may conveniently focus on dynamic information.

When there is a service needed by the user performing the mobile searching in the searching and ranking result, the searching engine foreground may record consulting and reservation behavior of the user performing the mobile searching and instruct the user performing the mobile searching to buy the service online or offline.

The data searching background may implement the following functions.

The data searching background may receive the processed query string from the searching engine foreground.

The data searching background may integrate the high-quality data and the general data, search out the associated data satisfying the query string, perform relevance calculation on the associated data and rank the associated data, integrate the associated data and the general data, support the searching result rich display mode and send the searching result to the searching engine foreground. The high-quality data may be the associated data.

According to an example of the present disclosure, a query and reservation unit may be further included. The query and reservation unit may be to:
receive a service consulting request sent from the user performing the mobile searching to the searching engine foreground and provide detailed information of the commercial tenant to the user performing the mobile searching;
record whether the user performing the mobile searching has performed telephone consulting;
record whether the user performing the mobile searching has performed telephone reservation; and
instruct the user performing the mobile searching to enter the online interaction unit if the user performing the mobile searching has performed the telephone reservation.

The online interaction unit may be to provide an online payment mode after the user performing the mobile searching performs the telephone reservation. The user performing the mobile searching may perform online payment via a mobile payment system.

The online interaction unit may be further to record payment behavior of the user performing the mobile searching and perform revenue splitting according to a revenue-sharing deal negotiated by the searching engine provider and the high-quality data provider.

According to this example of the present disclosure, the process for providing the high-quality data may include that the high-quality data provider may provide the high-quality data to the searching engine provider and negotiate the revenue-sharing deal with the searching engine provider. After the revenue-sharing deal is determined, the high-quality data provider and the searching engine provider may split the revenue according to the consulting and reservation record of the user to make a profit. After determining the revenue-sharing deal, the high-quality data provider may irregularly provide updated high-quality data, such as contact information to the searching engine provider and complement channels used for communicating with the user. The updated high-quality data regularly provided to the searching engine provider may include text data, audio and video data with description information, other multi-media data or links of the text data, audio and video data with description information and other multimedia data. The searching engine may record and sort the high-quality data and display relevant high-quality data as requested by the user.

An example of the present disclosure may further provide a machine-readable storage medium, to store instructions enabling a machine to execute the information searching method described above. Furthermore, this example may further provide a system or device with the storage medium. The storage medium may store software program codes for implementing functions of any of the above examples. The program codes stored in the storage medium may be read and executed with a computer (Central Processing Unit (CPU) or Micro Processor Unit (MPU)) of the system or device.

According to an example of the present disclosure, the program codes read from the storage medium may be used for executing the functions of any of the above examples. Therefore, the program codes and the storage medium storing the program codes may be protected by the present disclosure.

The storage medium providing the program codes may include a floppy disk, a hard disk, a magneto-optical disk, a compact disk (such as a Compact Disc-Read Only Memory (CD-ROM), Compact Disc-Recordable (CD-R), Compact Disc-Rewriteable (CD-RW), Digital Video Disc-Read Only Memory (DVD-ROM), Digital Video Disc-Read Access Memory (DVD-RAM), Digital Video Disc-Rewriteable (DVD-RW), Digital Video Disc + Rewriteable (DVD+RW), an magnetic tape, a nonvolatile memory card, and a ROM. The program codes may be downloaded from a service computer via a communication network.

It may be clear that partial or all actual operations may be implemented via the OS on the computer instructed by the program codes, except for executing the program codes read by the computer. Therefore, the functions of any of the above examples may be implemented.

Furthermore, it may be understood that the program codes read from the storage medium may be written into a storage set on an expansion board in the computer or written into a storage set on an expansion unit connected with the computer. Partial or all actual operations may be executed by the CPU on the expansion board on the expansion unit based on instructions of the program codes. Therefore, the functions of any of the examples may be implemented.

What has been described and illustrated herein are examples of the disclosure along with some variations. The terms, descriptions and figures used herein are set forth by way of illustration only and are not meant as limitations. Many variations are possible within the scope of the disclosure, which is intended to be defined by the following claims -- and their equivalents -- in which all terms are meant in their broadest reasonable sense unless otherwise indicated.

## Claims

1. An information searching method, comprising:
receiving a searching request comprising searching key information;
obtaining general data comprising the searching key information from a general data resource database;
obtaining associated data associated with the searching key information from an associated data resource database;
integrating the general data and the associated data into integrated data; and
displaying the integrated data on a webpage.

2. The method according to claim 1, wherein displaying the integrated data on the webpage comprises: displaying the associated data in the integrated data as a hyperlink on the webpage.

3. The method according to claim 2, further comprising:
receiving a hyperlink displaying instruction from a user;
sending an object query request to a service provider according to the hyperlink displaying instruction; and
receiving an object query response from the service provider.

4. The method according to claim 1, wherein the method further comprises:
performing relevance calculation on the associated data;
ranking the associated data in an order of decreasing relevance; and
selecting set number of associated data with the highest relevance;
integrating the general data and the associated data into the integrated data comprises:
integrating the general data and the selected associated data into the integrated data.

5. The method according to claim 3, wherein after receiving the object query response from the service provider, the method further comprises:
receiving a negotiation request from the user;
negotiating a reservation object and reservation number with the service provider according to the negotiation request; and
receiving content associated with the reservation object and the reservation number from the user.

6. The method according to any of claims 1 to 5, further comprising:
receiving an associated data update request comprising update content; and
updating the associated data stored in an associated data resource database.

7. An information searching system, comprising: a searching engine foreground and a data searching background; wherein
the searching engine foreground is to receive a searching request comprising searching key information, send the searching request to the data searching background, receive integrated data from the data searching background and display the integrated data on a webpage; and
the data searching background is to obtain general data comprising the searching key information from a general data resource database, obtain associated data associated with the searching key information from an associated data resource database, integrate the general data and associated data into the integrated data and send the integrated data to the searching engine foreground.

8. The system according to claim 7, wherein searching engine foreground is further to display the associated data in the integrated data as a hyperlink on the webpage.

9. The system according to claim 8, wherein the searching engine foreground is further to receive a hyperlink displaying instruction from a user, send an object query request to a service provider according to the hyperlink displaying instruction and receive an object query response from the service provider.

10. The system according to claim 9, wherein the searching engine foreground is further to receive a negotiation request from the user after receiving the object query response and negotiate a reservation object and reservation number with the service provider according to the negotiation request.

11. The system according to claim 7, wherein the system further comprises:
an online interaction unit, to receive content associated with a reservation object and reservation number from a user.

12. The system according to claim 7, wherein the data searching background comprises: a relevance ranking sub-unit, to perform relevance calculation on the associated data, rank the associated data in an order of decreasing relevance, select set number of associated data with the highest relevance, integrate the general data and the selected associated data into the integrated data and send the integrated data to the searching engine foreground.

13. The system according to claim 7, further comprising:
an updating unit, to receive an associated data update request comprising update content and update the associated data stored in the associated data resource database.

14. The system according to claim 9, wherein the searching engine foreground comprises at least one of a voice interaction sub-unit and an instant messaging client terminal device; wherein
the voice interaction sub-unit is to send the object query request to the service provider in a voice mode and receive the object query response from the service provider in the voice mode; and
the instant messaging client terminal device is to send the object query request to the service provider in an instant messaging mode and receive the object query response from the service provider in the instant messaging mode.

15. An information searching method, comprising:
receiving a searching request comprising searching key information;
obtaining general data comprising the searching key information from a general data resource database;
obtaining associated data associated with the searching key information from an associated data resource database;
integrating the general data and the associated data into integrated data; and
sending the integrated data to a searching engine foreground for displaying.

16. The method according to claim 15, further comprising:
performing relevance calculation on the associated data;
ranking the associated data in an order of decreasing relevance; and
selecting set number of associated data with the highest relevance;
wherein integrating the general data and the associated data into the integrated data comprises:
integrating the general data and the selected associated data into the integrated data.

17. A data searching background, wherein the data searching background is to receive a searching request comprising searching key information from a searching engine foreground, obtain general data comprising the searching key information from a general data resource database, obtain associated data associated with the searching key information from an associated data resource database, integrate the general data and the associated data into integrated data and send the integrated data to the searching engine foreground for displaying.

18. The data searching background according to claim 17, wherein the data searching background comprises:
a relevance ranking sub-unit, to perform relevance calculation on the associated data, rank the associated data in an order of decreasing relevance, select set number of associated data with the highest relevance, integrate the general data and the selected associated data into the integrated data and send the integrated data to the searching engine foreground for displaying.
